# EUROPÄISCHE PATENTSCHRIFT

(11) **EP 1 000 814 B1**
(45) Veröffentlichungstag und Bekanntmachung des Hinweises auf die Patenterteilung: **16.11.2005**
(21) Anmeldenummer: 99120811.7
(22) Anmeldetag: 21.10.1999
(51) Int. Cl.: B60R 19/24, B60R 11/00, B60R 19/52, B60Q 1/02, B60R 13/04, B62D 29/04, B60K 11/08

(54) **Anordnung zur Festlegung von Anbauteilen an einer Karosserie**
Arrangement for fixing sub-assemblies onto a vehicle body
Agencement de fixation de sous-ensembles sur une carrosserie

(30) Priorität: 09.11.1998 DE 19851491
(43) Veröffentlichungstag der Anmeldung: 17.05.2000
(73) Patentinhaber: Volkswagen Aktiengesellschaft, 38436 Wolfsburg (DE)
(72) Erfinder: Cordes, Rainer, 38559 Wagenhoff (DE); Seel, Werner, 38543 Hillerse (DE); Weiss, Andreas, 38440 Wolfsburg (DE)

(56) Entgegenhaltungen:
- EP-A- 0 256 764
- DE-A- 3 815 927
- DE-A- 4 432 766
- DE-A- 19 530 262
- DE-A- 19 740 288
- US-A- 4 379 648
- US-A- 4 466 754
- US-A- 5 141 282

## Beschreibung

Die Erfindung betrifft eine Anordnung zur Festlegung von wenigstens zwei Anbauteilen an einer Karosserie gemäß Oberbegriff des Anspruches 1.

Zur Verbesserung der Montage von Karosserieteilen und Anbauteilen wird insbesondere in der Großserienfertigung von Kraftfahrzeugen zunehmend dazu übergegangen, einfach zu fügende Bauteilgestaltungen zu verwenden. Hierbei ist vornehmlich für nicht hochbelastete Bauteile eines Kraftfahrzeuges, beispielsweise Verkleidungsteile oder sonstige Anbauteile, die Verbindung mit Rastelementen üblich. Beispielsweise werden Leuchteneinsätze, Abdeckungen für Karosserievertiefungen und Durchbrüche od. dgl. mit Deckelementen oder auch komplizierter geformten Verblendungselementen dadurch verkleidet, daß das entsprechende Verkleidungselement in die Öffnung oder Vertiefung eingesteckt wird und zugeordnete Rastelemente das angebrachte Verkleidungselement sichern.

Beispielsweise ist es aus der gattungsbildenden DE 195 30 262 A1 bekannt, auch eine Anordnung zur Befestigung von wenigstens zwei Anbauteilen an einem Grundkörper dadurch zu lösen, daß ein gesonderter Klemmkörper vorgeschlagen wird, dem im wesentlichen die für die Clipsverbindung relevanten Konstruktionselemente zugeordnet sind und der an einem der Anbauteile über wenigstens ein Rastmittel selbsthaltend befestigt ist und eine Verbindung der Anbauteile untereinander ermöglicht. Hierbei werden verschiedene Anbauteile durch Rastverbindungen derart zusammengefügt, daß sie über den Klemmkörper miteinander verbunden sind und in ihrer Lage zueinander durch die Rastverbindungen festgelegt werden. Problematisch an einer derartigen, mit einem Klemmkörper als Adapterelement arbeitenden Festlegung von Anbauteilen zueinander ist es, daß eine genaue Zuordnung der Anbauteile überwiegend im Bereich der Rastverbindungen gewährleistet ist, wohingegen zwischen den voneinander beabstandeten Rastverbindungen die Zuordnung der Anbauteile nicht sicher oder nicht in ausreichendem Maße gewährleistet ist.

Aufgabe der vorliegenden Erfindung ist es daher, eine Anordnung zur Festlegung von wenigstens zwei Anbauteilen insofern weiterzuentwickeln, daß die Zuordnung der Anbauteile zueinander und zu dem Adapterelement über wesentliche Abschnitte der Anbauteile gewährleistet ist.

Die Lösung dieser Aufgabe ergibt sich aus den kennzeichnenden Merkmalen des Anspruches 1 in Zusammenwirken mit den Merkmalen des Oberbegriffes. Die Unteransprüche beschreiben bevorzugte Weiterbildungen. Erfindungsgemäß

Erfindungsgemäß werden die Anbauteile nicht nur punktuell oder nur in bestimmten Abschnitten an dem Adapterteil festgelegt, sondern das Adapterteil, im speziellen die Steckgesichter für das Zuordnen der Anbauteile an dem Adapterteil, verfügen über Führungs- und Anschlagflächen, die sich über wesentliche Abschnitte der Steckgesichter erstrecken und damit die Lage der Anbauteile zueinander über weite Abschnitte der Steckgesichter sicher zueinander festlegen und gleichzeitig auch die Steckbewegung zwischen Anbauteilen und Adapterelement begrenzen. Erfindungsgemäß ist gewährleistet, daß nicht nur punktuell, sondern im Wesentlichen entlang der gesamten Berandung der Anbauteile, die in dem Adapterteil eingesteckt sind, das Anbauteil und das Adapterteil sicher geführt und festgelegt sind.

Durch die gleichzeitige Zuordnung aller an dem Adapterelement festzulegenden Anbauteile und die über weite Strecken der Berandung der Anbauteile sich erstreckende Festlegung durch die Steckgesichter läßt sich eine besonders genaue Zuordnung der Anbauteile zueinander erzielen, die im wesentlichen nur durch die Fertigungsgenauigkeit der Einsteckgesichter des Adapterteiles bedingt ist. Hierdurch können sich keine durch kettenartig sich aufbauende Ungenauigkeiten hervorgerufenen unzulässigen Lageveränderungen oder Lagezuordnungen der Anbauteile zueinander ergeben, sondern es ist immer eine genaue, durch die Steckgesichter des Adapterteiles vorzugebende Zuordnung der Anbauteile zueinander gewährleistet.

In einer vorteilhaften Weiterbildung sind zwischen den Steckgesichtern des Adapterteiles und den Anbauteilen Rastverbindungen vorgesehen, die die Verbindung von Adapterteil und Anbauteilen in Montagelage vorzugsweise lösbar verriegeln. Hierdurch wird nach dem Einstecken der Anbauteile in das Adapterteil dafür gesorgt, daß sich beispielsweise in Betrieb des Kraftfahrzeuges die Anbauteile nicht mehr von dem Adapterteil lösen können, wohingegen beispielsweise für Reparatur- oder Wartungszwecke die Anbauteile durch Lösen der Rastverbindung gezielt abnehmbar und aus den Steckgesichtern entfembar sind.

In einer besonders bevorzugten Weiterbildung ist eines der Anbauteile ein Stoßfänger eines Kraftfahrzeuges und ein anderes Anbauteil eine Aufnahme für eine Beleuchtungseinrichtung, wobei Stoßfänger und Beleuchtungseinrichtung vorzugsweise im Frontbereich oder Heckbereich eines Kraftfahrzeuges angeordnet sein können. Im Front- bzw. Heckbereich eines Kraftfahrzeuges werden häufig Beleuchtungseinrichtungen in oder benachbart an den Stoßfänger eingesetzt oder angebaut, wobei die Verwendung der erfindungsgemäßen Anordnung hierzu eine besonders einfache Festlegung derartiger Beleuchtungseinrichtungen an dem Stoßfänger bzw. in der Nähe des Stoßfängers erlauben.

In einer anderen vorteilhaften Ausgestaltung kann eines der Anbauteile ein Stoßfänger, ein anderes Anbauteil eine Aufnahme für eine Beleuchtungseinrichtung und ein weiteres Anbauteil ein zwischen Stoßfänger und Aufnahme für die Beleuchtungseinrichtung angeordnetes Abdeckteil z.B. im Frontbereich oder Heckbereich eines Kraftfahrzeuges sein. Häufig ist es konstruktiv nicht zu vermeiden, daß zwischen dem ersten Anbauteil, dem Stoßfänger und dem zweiten Anbauteil, der Beleuchtungseinrichtung, aus funktionellen oder gestalterischen Gründen ein Abstand vorzusehen ist, der ebenfalls aus ästhetischen Gründen häufig durch ein beispielsweise in der Karosseriefarbe lackiertes Abdeckteil zu verkleiden ist. Ein derartiges Abdeckteil stellt also eine optische Verblendung einer Vertiefung beispielsweise im Stoßfängerbereich oder im Bereich eines Heckabschlußbleches od. dgl. dar und muß sich aus optischen Gründen möglichst nahtlos in die Karosserieform einfügen. Insbesondere große Fugenbildung zwischen Abdeckteil und den dem Abdeckteil benachbarten Karosserieteilen oder dem Stoßfänger ist von Nachteil.

In vorteilhafter Weise kann ein derartiges Abdeckteil im wesentlichen topfförmig vertieft ausgebildet sein und zumindestens über große Teile entlang seiner die topfförmige Vertiefung bildenden Wandungen in das Steckgesicht des Adapterteiles eingesteckt sein. Hierdurch wird neben der mechanischen Zuordnung von Abdeckteil und beispielsweise Stoßfänger und Beleuchtungseinrichtung als weiteren Anbauteilen dafür gesorgt, daß durch das Einstecken in das Adapterteil eine genaue und damit optisch ansprechende Zuordnung von Abdeckteil, Stoßfänger und Beleuchtungseinrichtung als weiteren Anbauteilen gewährleistet ist.

In besonders vorteilhafter Ausgestaltung überdeckt das Abdeckteil einen zwischen den den Anbauteilen zugeordneten Steckgesichtern des Adapterteiles gebildeten Zwischenraum im wesentlichen flächig, so daß dieser Zwischenraum, der beispielsweise konstruktiv unvermeidbar ist, hinsichtlich der Karosseriegestaltung nach dem Einstecken des Abdeckteiles nicht mehr oder nicht mehr störend zu erkennen ist.

Von besonderem Vorteil ist es, wenn die Steckgesichter von Anbauteilen und Adapterteilen derart gestaltet sind, daß durch das Fügen von Anbauteilen und Adapterteil gleichzeitig eine Abdichtung gegen Flüssigkeitsdurchtritt zwischen den Anbauteilen und dem Adapterteil erfolgt. Hierdurch kann das Abdeckteil gleichwohl wie die Anbauteile gleichzeitig als Abdichtelement gegenüber Flüssigkeitseintritt beispielsweise in durch das Abdeckteil abgedeckte Hohlräume dienen, und es werden weitere, für die Montage kostenträchtige Abdichtmaßnahmen wie eingelegte Fugendichtungen od. dgl. überflüssig.

Von besonderem Vorteil ist es, wenn die Steckgesichter von Anbauteilen und Adapterteil derart gestaltet sind, daß die in Einbaulage einander benachbart angeordneten Abschnitte der Anbauteile nach dem Einstecken nur durch Fugen geringer Breite voneinander getrennt sind. Die Fugen ergeben sich im wesentlichen durch die zwischen den Einsteckvertiefungen gebildeten Zwischenstege in dem Adapterteil, die nur geringe Breiten aufweisen müssen, da sie im wesentlichen keine Festigkeitsfunktion zu erfüllen haben. Durch derartig geringe Stegbreiten können aber die einander zugeordneten Abschnitte der Anbauteile eng aneinander benachbart in das Adapterteil eingesteckt werden und beispielsweise in einer vorteilhaften Ausgestaltung eine Fugenbreite von bis zu 0,5 mm erlauben. Dies kommt der Forderung aus dem Karosseriebau nach dem sog. Null-Fugen-Konzept sehr entgegen.

Es ist weiterhin denkbar, daß das Adapterteil beispielsweise einstückig mit dem Stoßfänger oder einem anderen Anbauteil ausgebildet ist, so daß das Adapterteil nicht als separates Montageteil gehandhabt werden muß und gegebenenfalls zusätzliche Fertigungskosten für ein weiteres Teil entfallen können.

Darüber hinaus ist es denkbar, daß das Adapterteil aus einem Kunststoff gebildet ist, ebenfalls kann das Adapterteil aus Blechteilen gebildet sein, wobei selbstverständlich auch denkbar ist, daß zumindestens das oder die Steckgesichter des Adapterteiles aus Kunststoff sind. Die Gestaltung des Adapterteiles aus Kunststoff oder zumindestens im Bereich der Steckgesichter aus Kunststoff erlaubt eine besonders gute Steckmontage und einfache Fertigung, darüber hinaus kann durch entsprechende Toleranzwahl ein besonders gutes Abdichtverhalten gegenüber Flüssigkeitsdurchtritt erzielt werden. Eine Gestaltung als Blechteil hingegen erlaubt konstruktiv hochfeste Verbindungen, die gegebenenfalls auch Sicherheitsfunktionen übernehmen können. Weiterhin ist es denkbar, daß das Adapterteil zur Festlegung der Anordnung der Anbauteile an der Karosserie eines Kraftfahrzeuges selbst an der Karosserie festgelegt wird, beispielsweise durch eine Verschraubung od. dgl.. Hierdurch kann die Anordnung als z. B. vormontierter Verbund an der Karosserie befestigt und gesichert werden.

Eine besonders vorteilhafte Ausbildung der erfindungsgemäßen Anordnung zeigt die Zeichnung.

Es zeigt:
- Fig. 1: eine erste Ausführungsform der erfindungsgemäßen Anordnung von Anbauteilen und Adpaterteil mit in das Adapterteil eingestecktem Stoßfänger, Aufnahme für eine Beleuchtungseinrichtung sowie einem Abdeckteil;
- Fig. 2: eine Einzelteildarstellung des Adapterteiles ohne eingesteckte Anbauteile;
- Fig. 3: eine weitere Ausführungsform der erfindungsgemäßen Anordnung mit einem einstückig an einem Stoßfänger angeordneten Adapterabschnitt;
- Fig. 4: eine beispielhafte Gestaltung für ein Abdeckteil mit daran angeordneten, in das Adapterteil einsteckbaren Führungsstegen.

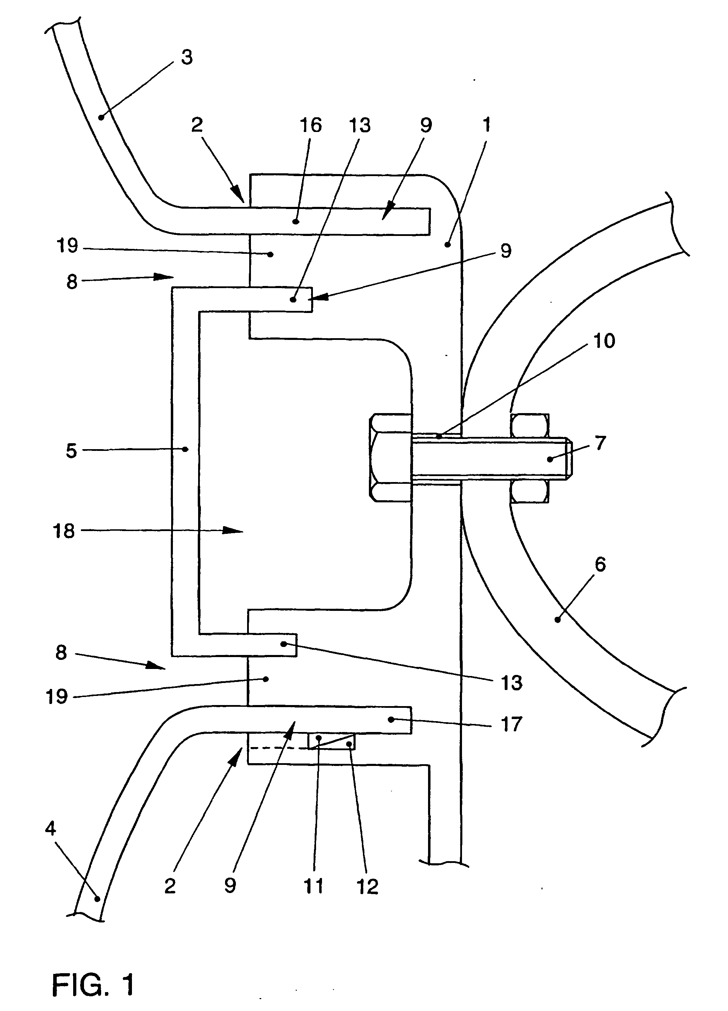

In der Figur 1 ist eine erste Ausführungsform der erfindungsgemäßen Anordnung mit einem Adapterelement 1 dargestellt, in das eine Leuchtenaufnahme 3, ein Abdeckteil 5 sowie ein Stoßfänger 4 in Einstecköffnungen 9 eingesteckt sind und derart zueinander und an einem an dem Adapterteil 1 mittels einer Verschraubung 7 festgelegten Karosserieteil 6 befestigt sind. Die Anordnung gemäß Figur 1 ist hierbei in einem Querschnitt dargestellt, wobei sich das Adapterteil 1, die Aufnahme 3, das Abdeckteil 5 und der Stoßfänger 4 senkrecht zur Zeichnungsebene nach vorne und hinten mit in etwa dem dargestellten Querschnitt erstrecken können.

Das Adapterteil 1 weist zum Einstecken der Anbauteile 3, 4, 5 Einstecköffnungen 9 auf, die in Form von etwa schlitzförmigen Vertiefungen auf die Einsteckelemente 13, 16, 17 der Anbauteile 3, 4, 5 abgestimmt sind und die genaue Position der Anbauteile 3, 4, 5 in der Montagestellung zueinander vorgeben. Hierfür sind die Einstecköffnungen 9 sowohl hinsichtlich der Einstecktiefe als auch der Breite der Einstecköffnungen derart gestaltet, daß die Einsteckelemente 13, 16, 17 sich leicht in die Einstecköffnungen 9 fügen lassen, gleichwohl aber die Einsteckelemente 13, 16, 17 sicher halten und gegebenenfalls auch klemmen können. Eine derartige Klemmung kann beispielsweise auch als Abdichtung gegenüber Flüssigkeitsdurchtritt vorgesehen werden, so daß beispielsweise ein von dem Abdeckteil 5 überspannter Zwischenraum 18 des Adapterteiles 1 flüssigkeitsdicht abgeschlossen ist. Dies ist insbesondere auch aus Korrosionschutzgründen gegebenenfalls von Vorteil.

Die Einsteckelemente 13, 16, 17 der Anbauteile 3, 4, 5, die sich senkrecht zur Zeichnungsebene nach vorne und hinten erstrecken, bedingen eine besonders gute Führung und Festlegung der Anbauteile 3, 4, 5 in dem Adapterelement 1. Gleichzeitig ist durch zwischen den Einstecköffnungen 9 vorgesehene Stege 19 gewährleistet, daß die Anbauelemente 3, 4, 5 in einem definierten Abstand zueinander einzustecken sind und damit in der Montagelage gehalten sind, wodurch sich definierte Fugenbreiten der Fugen 8 zwischen den Anbauteilen 3, 4, 5 ergeben, die in vorteilhafter Ausgestaltung auch im Bereich weniger zehntel Millimeter ausgebildet sein können und damit der Forderung nach einer Null-Fugen-Karosserie nahekommen. Darüber hinaus hat die Verwendung des Adapterteiles 1 mit den Einstecköffnungen 9 in definierter Lage zueinander den Vorteil, daß bei ansonsten üblichen Montagevorgängen sich aufsummierende Ungenauigkeiten bei der Montage bei der erfindungsgemäßen Anordnung nicht auftreten können. Alle maßlichen Festlegungen für die Zuordnung der Anbauteile 3, 4, 5 sind in den Steckgesichtern 2 des Adapterteiles 1 vorgegeben, wobei die Steckgesichter 2 durch die Anordnung von Stegen 19 und Einstecköffnungen 9 gegeben ist. Die Einsteckelemente 13, 16, 17 der Anbauteile 3, 4, 5 sind passend zu diesen Steckgesichtern 2 des Adapterteiles 1 ausgebildet, wobei in grundsätzlich für derartige Steckverbindungen bekannter Weise Distanzelemente, Anschläge, Tiefenbegrenzung und dergleichen an dem Einsteckgesicht 2 bzw. den Einsteckelementen 13, 16, 17 vorgesehen sein können.

Von besonderem Vorteil ist es, wie in dem unteren Teil der Figur 1 an dem Einsteckelement 17 des Stoßfängers 4 angedeutet, wenn neben einer eventuellen Klemmung des Einsteckelementes 17 in der Einstecköffnung 9 zusätzliche Verrastungselemente 11, 12 vorgesehen werden, die ein unbeabsichtigtes Herausziehen des Einsteckelementes 17 aus der Einstecköffnung 9 verhindern. Hierbei können derartige Verrastungselemente 11, 12 z. B. für Reparatur- oder Wartungszwecke zugänglich sein, so daß durch Aufheben der Verrastung beispielsweise der Stoßfänger 4 mit seinem Einsteckelement 17 wieder aus der Einstecköffnung 9 des Adapterteiles 1 herausnehmbar ist.

Das Abdeckteil 5 kann bei der in der Figur 1 dargestellten Anordnung dazu dienen, beispielsweise in Form einer Verblendung, die beispielsweise auch in der Karosseriefarbe lackiert sein kann, einen konstruktiv oder aus sonstigen Gründen unvermeidbaren Zwischenraum 18 zu überdecken, so daß ohne aufwendige Montage eine optisch ansprechende Verblendung eines derartigen Zwischenraumes 18 durch das Abdeckteil 5 realisiert werden kann.

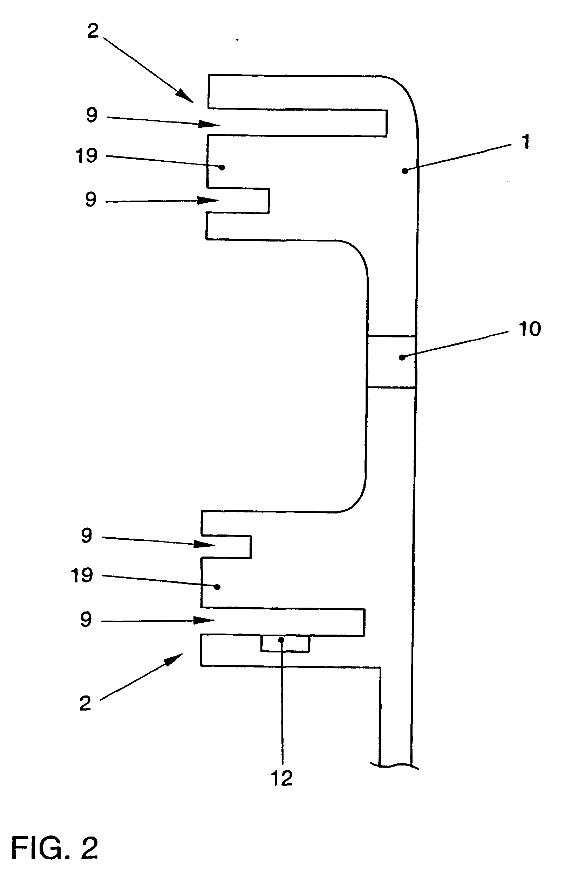

In der Figur 2 ist das Adapterteil 1 noch einmal als Einzelteil im Schnitt dargestellt, so daß man besonders gut die Ausgestaltung der Einstecköffnungen 9, die das aus den Einstecköffnungen 9 sowie den Stegen 19 gebildete Einsteckgesicht 2 und das Verrastungselement 12 erkennen kann. Die Herstellung eines derartigen Adapterteiles 1 ist mit nur geringen Kosten möglich, wobei die Gewährleistung der maßlichen Gestaltung der Einstecköffnungen 9 und Stege 19 besonders einfach vorgenommen werden kann.

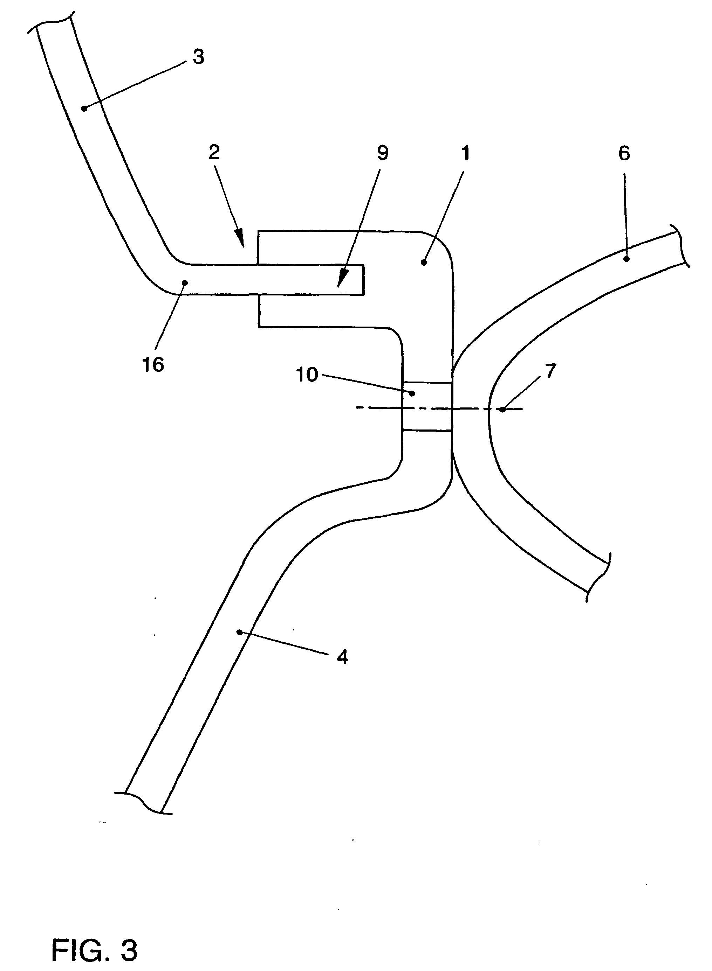

In der Figur 3 ist eine andere Ausführungsform der erfindungsgemäßen Anordnung dargestellt, wobei das Adapterteil 1 hier nicht ein separates, auf alle Anbauteile 3, 4, 5 aufzusteckendes Element ist, sondern es ist einstückig mit dem Stoßfänger 4 ausgebildet und bildet den der Aufnahme 3 für eine Beleuchtungsvorrichtung zugeordneten Abschluß des Stoßfängers 4. Im Gegensatz zu der Ausführungsform nach der Figur 1 ist ein Abdeckteil 5 in dieser Form nicht dargestellt, selbstverständlich aber auch hier vorsehbar. Die einstückige Ausführung des Adapterteiles 1 hat hierbei den Vorteil, daß bei einfachen Ausgestaltungen der Anbauteile 3, 4, 5 ohne zusätzlich benötigte Werkzeuge ein derartiges Adapterteil 1 mit an einem der Anbauteile, hier also dem Stoßfänger 4 angeformt werden kann und gleichwohl eine einfache und sichere Zuordnung der Anbauteile 3, 4, 5 mit dem adapterartigen Abschnitt des Stoßfängers 4 realisiert werden kann. Ansonsten gelten für eine derartige Ausführungsform der erfindungsgemäßen Anordnung die schon zu der Figur 1 erläuterten Eigenschaften.

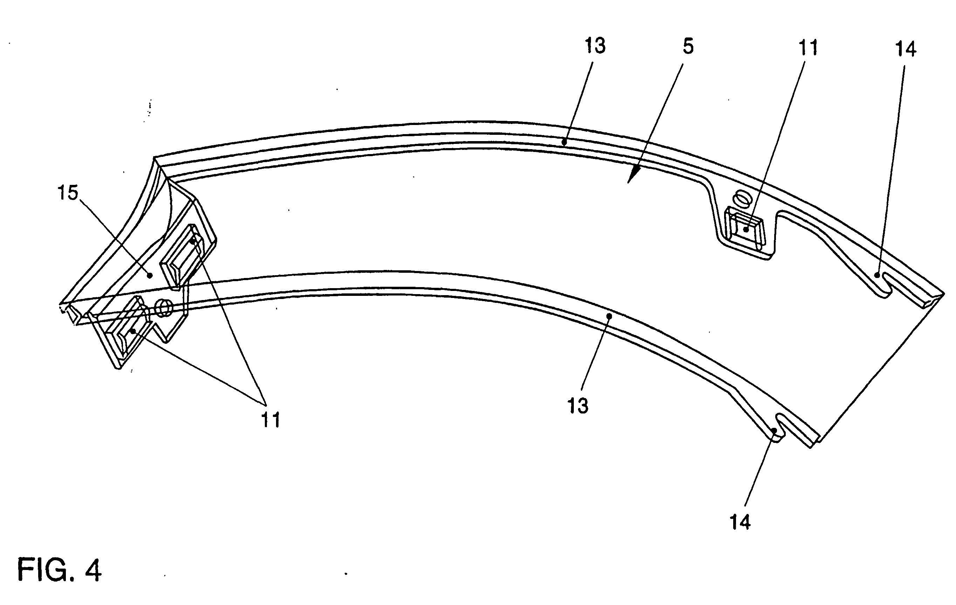

In der Figur 4 ist ein beispielhaftes Abdeckteil 5 dargestellt, bei dem man die besondere Möglichkeit zur Zuordnung des Abdeckteiles 5 als eines der Anbauteile 3, 4, 5 zu den Einstecköffnungen 9 des Adapterteiles 1 erkennen kann. Das Abdeckteil 5, das hier in Form einer gekrümmten, schalenförmigen Gestaltung ausgebildet ist, weist seitlich Einsteckelemente 13 in Form von stegartigen Begrenzungen auf, die im wesentlichen entlang der gesamten Längserstreckung des Abdeckteiles 5 randseitig verlaufen. Durch das Einstecken dieser Einsteckelemente 13 in die hier nicht weiter dargestellten Einstecköffnungen 9 des Adapterteiles 1 wird dafür gesorgt, daß die Festlegung des Abdeckteiles 5 an dem Adaptereil 1 im wesentlichen entlang der gesamten oberen und unteren Berandung des Abdeckteiles 5 erfolgt. Hierdurch sind beispielsweise Undichtigkeiten oder ungenaue Zuordnungen von Abdeckteil 5 sowie der anderen Anbauteile 3, 4 zu dem Abdeckteil 5 sicher ausgeschlossen, darüber hinaus ist durch das nur angedeutete und grundsätzlich bekannte Verrastungselement 11 eine Festlegung in der Einstecköffnung 9 mit einem in Figur 1 dargestellten Verrastungselement 12 analogen Verrastungselement gewährleistet. An einer Stirnseite des Abdeckteiles 5 sind Einhängehaken 14 zu erkennen, mit denen das Abdeckteil 5 in entsprechende Gegenformen eingesteckt werden kann, wobei an der gegenüberliegenden Stirnseite ein Kopfteil 14 mit ebenfalls daran angeordneten Verrastungselementen 11 beispielsweise mit entsprechenden Gegenformen des Adapterteiles 1 korrespondiert und dort festlegbar ist. Das Abdeckteil 5 ist damit im wesentlichen entlang seiner gesamten Berandung sicher an dem Adapterteil 1 bzw. weiteren Anbauteilen 3, 4, 5 od. dgl. gehalten und erfüllt neben einer guten Befestigung zusätzliche Abdichtfunktionen, um den in der Figur 1 dargestellten Zwischenraum 18 sicher gegenüber z. B. Flüssigkeitsdurchtritt od. dgl. abzuschotten.

### SACHNUMMERNLISTE

- 1: Adapterelement
- 2: Steckgesicht
- 3: Leuchtenaufnahme
- 4: Stoßfänger
- 5: Abdeckteil
- 6: Karosserie
- 7: Schraube
- 8: Fuge
- 9: Einstecköffnung
- 10: Öffnung
- 11: Verrastungselement
- 12: Rastvertiefung
- 13: Einsteckelement Abdeckteil
- 14: Einhängehaken
- 15: Kopfteil
- 16: Einsteckelement Leuchtenaufnahme
- 17: Einsteckelement Stoßfänger
- 18: Zwischenraum
- 19: Steg

## Patentansprüche

1. Anordnung zur Festlegung von wenigstens zwei Anbauteilen (3, 4, 5) an einer Karosserie (6), wobei zur Zuordnung von Anbauteilen (3, 4, 5) und Karosserie (6) ein Adapterteil (1) an den Anbauteilen (3, 4, 5) und an der Karosserie (6) festlegbar ist,
**dadurch gekennzeichnet, dass**
das Adapterteil (1) mit den mindestens zwei Anbauteilen (3, 4, 5) jeweils zugeordneten Steckgesichtern (2) derart versehen ist, dass mit dem Aufstecken des Adapterteiles (1) zumindest auf zugeordnete und im Wesentlichen entlang der gesamten Längserstreckung des Anbauteils (3, 4, 5) verlaufende randstegartige Steckkonturen (13, 16, 17) der Anbauteile (3, 4, 5) diese lagegerecht einander zugeordnet und über das Adapterteil (1) aneinander festgelegt sind, indem die Steckgesichter (2) des Adapterteils (1) über wesentliche Teile der Steckgesichter (2) sich erstreckende Führungs- und Anschlagflächen (9) in Form von Einstecköffnungen aufweisen, in welche die besagten stegartigen Steckkonturen (13, 16, 17), die Lage der Anbauteile (3, 4, 5) zueinander festlegend und die Steckbewegungen begrenzend, einbringbar sind.

2. Anordnung nach Anspruch 1, **dadurch gekennzeichnet, dass** zwischen den Steckgesichtem (2) des Adapterteiles (1) und den Anbauteilen (3, 4, 5) Rastverbindungen (11, 12) vorgesehen sind, die die Verbindung von Adapterteil (1) und Anbauteilen (3, 4, 5) in Montagelage lösbar verriegeln.

3. Anordnung nach einem der Ansprüche 1 oder 2, **dadurch gekennzeichnet, dass** eines der Anbauteile ein Stoßfänger (4) und ein anderes Anbauteil eine Aufnahme (3) für eine Beleuchtungseinrichtung, vorzugsweise im Frontbereich oder Heckbereich, eines Kraftfahrzeuges ist.

4. Anordnung nach einem der Ansprüche 1 oder 2, **dadurch gekennzeichnet, dass** eines der Anbauteile ein Stoßfänger (4), ein anderes Anbauteil eine Aufnahme (3) für eine Beleuchtungseinrichtung und ein weiteres Anbauteil ein zwischen Stoßfänger (4) und Aufnahme (3) für die Beleuchtungseinrichtung angeordnetes Abdeckteil (5) etwa im Frontbereich oder Heckbereich eines Kraftfahrzeuges ist.

5. Anordnung nach Anspruch 4, **dadurch gekennzeichnet, dass** das Abdeckteil (5) im wesentlichen topfförmig vertieft ausgebildet ist und zumindest über große Teile entlang seiner die topfförmige Vertiefung bildenden Wandungen (13) in das Steckgesicht (2) des Adapterteiles (1) eingesteckt ist.

6. Anordnung nach einem der Ansprüche 4 oder 5, **dadurch gekennzeichnet, dass** das Abdeckteil (5) einen zwischen den den Anbauteilen (3, 4, 5) zugeordneten Steckgesichtern (2) des Adapterteiles (1) gebildeten Zwischenraum (18) im wesentlichen flächig überdeckt.

7. Anordnung nach einem der vorstehenden Ansprüche, **dadurch gekennzeichnet, dass** die Steckgesichter (2) von Anbauteilen (3, 4, 5) und Adapterteil (1) derart gestaltet sind, **dass** durch das Fügen von Anbauteilen (3, 4, 5) und Adapterteil (1) gleichzeitig eine Abdichtung gegen Flüssigkeitsdurchtritt zwischen Anbauteilen (3, 4, 5) und Adapterteil (1) erfolgt

8. Anordnung nach einem der vorstehenden Ansprüche, **dadurch gekennzeichnet, dass** die Steckgesichter (2) von Anbauteilen (3, 4, 5) und Adapterteil (1) derart gestaltet sind, dass Fugen (8) zwischen den in Einbaulage einander benachbart angeordneten Abschnitten der Anbauteile (3, 4, 5) von ≤ 0,5 mm ausbildbar sind.

9. Anordnung nach einem der vorstehenden Ansprüche, **dadurch gekennzeichnet, dass** das Adapterteil (1) einstückig mit dem Stoßfänger (4) oder einem anderen Anbauteil (3, 5) ausgebildet ist.

10. Anordnung nach einem der vorstehenden Ansprüche, **dadurch gekennzeichnet, dass** das Adapterteil (1) aus Kunststoff gebildet ist.

11. Anordnung nach einem der Ansprüche 1 bis 10, **dadurch gekennzeichnet, dass** das Adapterteil (1) aus Blechteilen gebildet ist.

12. Anordnung nach Anspruch 11, **dadurch gekennzeichnet, dass** zumindestens die Führungselemente (13, 16, 17) des Adapterteiles (1) aus Kunststoff sind.

13. Anordnung nach einem der vorstehenden Ansprüche, **dadurch gekennzeichnet, dass** das Adapterteil (1) an der Karosserie (6) des Kraftfahrzeuges, vorzugsweise mittels einer Verschraubung (7) festgelegt ist.

## Claims

1. Arrangement for fixing at least two sub-assemblies (3, 4, 5) onto a vehicle body (6), with an adapter part (1) being fixable on the sub-assemblies (3, 4, 5) and on the vehicle body (6) for the assignment of sub-assemblies (3, 4, 5) and vehicle body (6), **characterized in that** the adapter part (1) is provided in such a manner with plug-in faces (2), which are assigned in each case to the at least two sub-assemblies (3, 4, 5), that, with the plugging in of the adapter part (1) at least onto assigned plug-in contours (13, 16, 17) of the sub-assemblies (3, 4, 5), which plug-in contours run essentially along the entire longitudinal extent of the sub-assembly (3, 4, 5) and are in the manner of edge webs, the said sub-assemblies (3, 4, 5) are assigned to one another in the correct position and are fixed on one another via the adapter part (1) by the plug-in faces (2) of the adapter part (1) having guiding and stop surfaces (9) which extend over substantial parts of the plug-in faces (2) and are in the form of plug-in openings, into which the said web-like plug-in contours (13, 16, 17) can be placed, fixing the position of the sub-assemblies (3, 4, 5) with respect to one another and limiting the plug-in movements.

2. Arrangement according to Claim 1, **characterized in that** latching connections (11, 12) are provided between the plug-in faces (2) of the adapter part (1) and the sub-assemblies (3, 4, 5), the latching connections releasably locking the connection of adapter part (1) and sub-assemblies (3, 4, 5) in the installation position.

3. Arrangement according to either of Claims 1 and 2, **characterized in that** one of the sub-assemblies is a bumper (4) and another sub-assembly is a receptacle (3) for a lighting device, preferably in the front region or rear region of a motor vehicle.

4. Arrangement according to either of Claims 1 and 2, **characterized in that** one of the sub-assemblies is a bumper (4), another sub-assembly is a receptacle (3) for a lighting device and a further sub-assembly is a covering part (5), for example in the front region or rear region of a motor vehicle, the covering part being arranged between the bumper (4) and receptacle (3) for the lighting device.

5. Arrangement according to Claim 4, **characterized in that** the covering part (5) is recessed essentially in a cup-shaped manner and at least over large parts along its walls (13) forming the cup-shaped recess is plugged into the plug-in face (2) of the adapter part (1).

6. Arrangement according to either of Claims 4 and 5, **characterized in that** the covering part (5) covers, essentially in a planar manner, an intermediate space (18) formed between the plug-in faces (2) of the adapter part (1), which plug-in faces are assigned to the sub-assemblies (3, 4, 5).

7. Arrangement according to one of the preceding claims, **characterized in that** the plug-in faces (2) of sub-assemblies (3, 4, 5) and adapter part (1) are designed in such a manner that the joining of sub-assemblies (3, 4, 5) and adapter part (1) at the same time provides a seal between sub-assemblies (3, 4, 5) and adapter part (1) against the penetration of liquid.

8. Arrangement according to one of the preceding claims, **characterized in that** the plug-in faces (2) of sub-assemblies (3, 4, 5) and adapter part (1) are designed in such a manner that gaps (8) of ≤ 0.5 mm can be formed between those sections of the sub-assemblies (3, 4, 5) which are arranged adjacent to one another in the installation position.

9. Arrangement according to one of the preceding claims, **characterized in that** the adapter part (1) is formed integrally with the bumper (4) or another sub-assembly (3, 5).

10. Arrangement according to one of the preceding claims, **characterized in that** the adapter part (1) is formed from plastic.

11. Arrangement according to one of Claims 1 to 10, **characterized in that** the adapter part (1) is formed from sheet-metal parts.

12. Arrangement according to Claim 11, **characterized in that** at least the guiding elements (13, 16, 17) of the adapter part (1) are made from plastic.

13. Arrangement according to one of the preceding claims, **characterized in that** the adapter part (1) is fixed onto the body (6) of the motor vehicle, preferably by means of a screw connection (7).

## Revendications

1. Agencement de fixation d'au moins deux sous-ensembles (3, 4, 5) sur une carrosserie (6), dans lequel une pièce d'adaptateur (1) peut être fixée sur les sous-ensembles (3, 4, 5) et sur la carrosserie (6) en vue de l'association des sous-ensembles (3, 4, 5) et de la carrosserie (6),
**caractérisé en ce que**
la pièce d'adaptateur (1) est pourvue de faces d'enfichage (2) associées respectivement aux au moins deux sous-ensembles (3, 4, 5), de telle sorte qu'avec l'enfichage de la pièce d'adaptateur (1) au moins sur des contours d'enfichage (13, 16, 17) associés et de type nervures de bord des sous-ensembles (3, 4, 5) s'étendant essentiellement le long de toute l'étendue longitudinale du sous-ensemble (3, 4, 5), ceux-ci soient associés les uns aux autres en position appropriée et soient fixés les uns aux autres par le biais de la pièce d'adaptateur (1), par le fait que les faces d'enfichage (2) de la pièce d'adaptateur (1) présentent des surfaces de guidage et de butée (9) s'étendant sur des parties majeures des faces d'enfichage (2) en forme d'ouvertures d'enfichage, dans lesquelles lesdits contours d'enfichage de type nervures (13, 16, 17) peuvent être introduits en fixant la position des sous-ensembles (3, 4, 5) les uns par rapport aux autres et en limitant les mouvements d'enfichage.

2. Agencement selon la revendication 1, **caractérisé en ce que** l'on prévoit entre les faces d'enfichage (2) de la pièce d'adaptateur (1) et les sous-ensembles (3, 4, 5) des connexions par encliquetage (11, 12) qui verrouillent de manière détachable la connexion de la pièce d'adaptateur (1) et des sous-ensembles (3, 4, 5) dans la position de montage.

3. Agencement selon l'une quelconque des revendications 1 ou 2, **caractérisé en ce que** l'un des sous-ensembles est un pare-chocs (4) et un autre sous-ensemble est un logement (3) pour un dispositif d'éclairage, de préférence dans la région frontale ou dans la région arrière d'un véhicule automobile.

4. Agencement selon l'une quelconque des revendications 1 ou 2, **caractérisé en ce que** l'un des sous-ensembles est un pare-chocs (4), un autre sous-ensemble est un logement (3) pour un dispositif d'éclairage et un sous-ensemble supplémentaire est une partie de recouvrement (5) disposée entre le pare-chocs (4) et le logement (3) pour le dispositif d'éclairage, approximativement dans la région frontale ou dans la région arrière d'un véhicule automobile.

5. Agencement selon la revendication 4, **caractérisé en ce que** la partie de recouvrement (5) est réalisée de manière renfoncée essentiellement en forme de pot et est enfoncée dans la face d'enfichage (2) de la partie d'adaptateur (1) sur au moins de grandes parties le long de ses parois (13) formant le renfoncement en forme de pot.

6. Agencement selon l'une quelconque des revendications 4 ou 5, **caractérisé en ce que** la partie de recouvrement (5) recouvre de manière essentiellement plane un espace intermédiaire (18) formé entre les faces d'enfichage (2) associées aux sous-ensembles (3, 4, 5) de la pièce d'adaptateur (1).

7. Agencement selon l'une quelconque des revendications précédentes, **caractérisé en ce que** les faces d'enfïchage (2) des sous-ensembles (3, 4, 5) et de la pièce d'adaptateur (1) sont configurées de telle sorte que l'assemblage des sous-ensembles (3, 4, 5) et de la pièce d'adaptateur (1) produise simultanément une étanchéité contre la pénétration de liquide entre les sous-ensembles (3, 4, 5) et la pièce d'adaptateur (1).

8. Agencement selon l'une quelconque des revendications précédentes, **caractérisé en ce que** les faces d'enfichage (2) des sous-ensembles (3, 4, 5) et de la pièce d'adaptateur (1) sont configurées de telle sorte que des joints (8) ≤ 0,5 mm puissent être réalisés entre les portions des sous-ensembles (3, 4, 5) adjacentes dans la position de montage.

9. Agencement selon l'une quelconque des revendications précédentes, **caractérisé en ce que** la pièce d'adaptateur (1) est réalisée d'une seule pièce avec le pare-chocs (4) ou avec un autre sous-ensemble (3 ,5).

10. Agencement selon l'une quelconque des revendications précédentes, **caractérisé en ce que** la pièce d'adaptateur (1) est en plastique.

11. Agencement selon l'une quelconque des revendications 1 à 10, **caractérisé en ce que** la pièce d'adaptateur (1) est formée de pièces de tôle.

12. Agencement selon la revendication 11, **caractérisé en ce qu'**au moins les éléments de guidage (13, 16, 17) de la pièce d'adaptateur (1) sont en plastique.

13. Agencement selon l'une quelconque des revendications précédentes, **caractérisé en ce que** la pièce d'adaptateur (1) peut être fixée sur la carrosserie (6) du véhicule automobile, de préférence au moyen d'un vissage (7).
